# EUROPEAN PATENT APPLICATION

(11) **EP 4 778 758 A1**
(43) Date of publication of application: **22.07.2026**
(21) Application number: 25152055.7
(22) Date of filing: 15.01.2025
(51) Int. Cl.: B60K 17/16, B60K 1/00, F16H 3/66, F16H 48/10

(54) **DRIVE AXLE AND VEHICLE**

(71) Applicant: ZF Friedrichshafen AG, 88046 Friedrichshafen (DE)
(72) Inventor: Dong, Ye, Shanghai, 201615 (CN)
(74) Representative: WBH Wachenhausen Patentanwälte PartG mbB

(57) **Abstract**

The invention relates to a drive axle (2) for a vehicle (1). The drive axle comprises a drive shaft (12), a two-speed transmission (60), and a gearing (3). The gearing comprises an input shaft (4), a first output shaft (5), a second output shaft (6), a first planetary gear set (70) and a second planetary gear set (80). The two-speed transmission (60) comprises a first switching element (61), a second switching element (62) and a third planetary gear set (90). The invention also relates to a vehicle with the drive axle (2).

## Description

### Technical field

The present invention relates to a drive axle and a vehicle having such a drive axle.

### Prior art

Drive axles for vehicles are known. In some cases, the drive axle is provided with an electrical motor for converting electrical power into mechanical power for driving the vehicle. Usually, a gearing connects the electrical motor to drive elements attached to the drive axle, such as wheels. Moreover, a differential is provided to allow for different rotational speeds at two opposite sides of the axle. Required installation space for those components may be large and it may be difficult to provide a sufficient gear ratio between the electric motor and the drive elements.

### Summary of the invention

The present disclosure relates in a first aspect to a drive axle for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The drive axle may be configured to convert electrical power into mechanical power for driving the vehicle. The drive axle may be provided as an axle of the vehicle, for example a front axle or a rear axle of the vehicle. Drive elements, such as wheels or driving chains, may be attached to the drive axle and may be driven thereby. For example, a first wheel may be operatively attached to a first side of the drive axle and a second wheel may be operatively attached to an opposite second side of the drive axle. A motive force may thus be transferred to the ground. The drive axle may extend in a transverse direction of the vehicle. Alternatively, a front axle and a rear axle may be attached to the opposite ends of the drive axle. The drive axle may thus drive both the front and the rear axles of the vehicle. The drive axle may extend in a longitudinal direction of the vehicle in this case.

The electrical drive axle may comprise an electrical motor with a rotor shaft. A rotor of the electrical motor may be mechanically connected to a rotor shaft. The rotor may be connected permanently non-rotatably to the rotor shaft. Alternatively, the mechanical connection between the rotor and the rotor shaft may be configured to allow some slip. The rotor shaft may extend at least partly through the electrical motor. The electrical motor may be configured to convert an input electrical power into an output power applied to the rotor shaft. Further to the rotor, the electrical motor may comprise a stator. The stator may be permanently non-rotatably connected to a stationary member. The stationary member may be configured as a housing of just the electrical motor, other components or the entire drive axle. The stationary member may comprise several elements. At least one of the rotor and the stator may be provided for inducing a magnetic field. At least one of the rotor and the stator may be provided with permanent magnets. In one example, the rotor comprises permanent magnets and the stator comprises windings for inducing a magnetic field. The electrical motor may receive electrical energy from an energy source of the vehicle, for example a battery, and convert it to rotational mechanical energy, for example to a driving torque for the rotor shaft. The drive axle comprises a drive shaft, which may be formed by the rotor shaft.

The drive axle further comprises a gearing. The gearing comprises an input shaft, a first output shaft and a second output shaft. The two output shafts may be arranged coaxially to each other. At least one of the output shafts may be arranged coaxially to the drive shaft. The input shaft may be arranged coaxially to the drive shaft. An axis of rotation of two elements may be identical if those two elements are coaxial to each other. The drive shaft may be formed as a hollow shaft. The first output shaft may extend at least partly through the drive shaft. In one example, the first output shaft extends along and beyond the whole axial length of the drive shaft. The first output shaft may terminate at a first end and the second output shaft may terminate at an axially opposite second end. The first output shaft and second output shaft may form output shafts of the drive axle. The two output shafts may each be mechanically operatively connected to a drive element of the vehicle. The drive element may be, for example, a wheel for contacting the ground or a drive wheel or sprocket for tracks. The gearing may provide a differential function. The gearing may thus allow different rotational speeds of the two output shafts. The gearing may be configured as a distribution gearing. The gearing may distribute power entering the input shaft to the two output shafts. In addition, the gearing may provide a gear ratio in a compact manner, for example to achieve a desired rotational speed of the output shafts in view of the range of rotational speeds provided by the electrical motor in an efficient manner. The gearing may have a transmission ratio having an amount larger than 1 such that the gearing acts as a reduction gearing.

The drive axle comprises a two-speed transmission. The transmission may be disposed in a power flow between the drive shaft and the gearing. The transmission may thus provide an additional gear ratio between the drive shaft and the input shaft of the gearing. The transmission is shiftable between a first speed with a first gear ratio and a second speed with a second gear ratio different to the first gear ratio. The shifting may be automatically or manually controlled. Optionally, the transmission may also be configured to disconnect the drive shaft from the input shaft, thus providing an idle speed.

The gearing and the two-speed transmission may each be configured for converting an input value into an output value. For example, the two-speed transmission may be able to convert an input rotational speed into a lower output rotational speed and an input torque into a higher output torque with two selectable ratios. The gearing and the two-speed transmission may each comprise one or more gear sets configured to convert torques and rotational speeds from one value to another. The gear set or sets may be formed as spur gears, planetary gear sets, bevel gears or other suitable gears.

The drive axle comprises a stationary member, which may be formed as a housing. The housing may be provided as one or several casings for enclosing stationary and/or rotational components of the gearing, the transmission and/or the electrical motor. The housing may also be configured as the stationary member for providing support and for receiving forces and torques. The housing may comprise several detachable housing portions. Each housing portion may be configured to accommodate and support different components. For example, the housing may comprise one or more housing portions for enclosing and rotatably supporting the gearing. For example, the housing may comprise one or more housing portions for enclosing and rotatably supporting the electrical motor. For example, the housing may comprise one or more housing portions for enclosing and rotatably supporting the two-speed transmission. The exemplary housing portions may be mounted to each other or formed integrally with each other.

The gearing comprises a first planetary gear set and a second planetary gear set. The two-speed transmission comprises a first switching element, a second switching element and a third planetary gear. The drive axle may thus comprise three planetary gears. The two-speed transmission may be free of other planetary gears other parts besides those mentioned herein. The gearing may be free of other planetary gears or other parts besides those mentioned herein. The drive axle may be free of other gears sets or other parts besides those mentioned herein.

The first planetary gear set may comprise a first element, a second element and a third element. The second planetary gear set may comprise a first element, a second element and a third element. The third planetary gear set may comprise a first element, a second element and a third element. Each element may be a rotatable element of the planetary gear, although some of those elements may be fixed, for example by being permanently non-rotatably connected to the stationary member. For example, each element may be configured as a sun gear, planetary carrier or ring gear. A planetary gear set may be configured as a plus or minus planetary gear set. A planetary gear set may comprise one or several planet gears. Each planetary gear may be rotatably mounted on the respective planetary carrier of the one planetary gear set, for example on a planetary pin. For example, in a minus planetary gear set, each planetary gear may mesh with the sun gear and ring gear of that planetary gear set. For example, a plus planetary gear set may comprise a first and second set of planetary gear. The planetary gears of the first set may mesh with the sun gear and pairwise with the planetary gears of the second set. The planetary gears of the second set may mesh with the ring gear and correspondingly pairwise with the planetary gears of the first set.

A switching element may be configured as a frictionally or interlocking engaging switching element. An example of a frictionally engaging switching element is a multi-plate clutch. An example of an interlocking engaging switching element is a claw coupling. A switching element may be adjustable between a first state and a second state. The first state may be an open state. The second state may be a closed state. A non-rotatable connection between two elements may be established by a switching element in the second state. The non-rotatable connection between two elements may be cancelled by moving the switching element in the first state. The non-rotatable connection may be established when the switching element is actuated, which may adjust the switching element in the second state. The non-rotatable connection may be released when the switching element is no longer actuated, which may move the switching element in the second state. An actuator, such as an electrical or pneumatic actuator, may be provided for each switching element. Actuating the first switching element may select the first speed in the two-speed transmission. To select the first speed, it may be required to release the second switching element. Actuating the second switching element may select the second speed in the two-speed transmission. To select the second speed, it may be required to release the first switching element.

The input shaft is permanently non-rotatably connected to the first element of the first planetary gear set. The second element of the first planetary gear set is permanently non-rotatably connected to the first output shaft. The third element of the first planetary gear is permanently non-rotatably connected to the first element of the second planetary gear set, e.g. by being integrally formed. The second element of the second planetary gear set is permanently non-rotatably connected to the stationary member. The third element of the second planetary gear set is permanently non-rotatably connected to the second output shaft. The first element of the third planetary gear set is permanently non-rotatably connected to the drive shaft. The second element of the third planetary gear set is non-rotatably connectable to the input shaft via the first switching element. The third element of the third planetary gear set is permanently non-rotatably connected to the stationary member. The drive shaft is non-rotatably connectable to the input shaft via the second switching element. When the first speed is selected, the drive shaft thus drives the input shaft via the third planetary gear set. When the second speed is selected, the drive shaft drives the input shaft directly.

The first element of the third planetary gear set is a sun gear. The second element of the third planetary gear set is a planetary carrier. The third element of the third planetary gear set is a ring gear. The two-speed transmission may thus provide suitable ratios for vehicles in a compact manner. In addition, the second speed may be very efficient due to the direct connection of the drive shaft to the input shaft of the gearing. The sun gear, planetary carrier and ring gear of the third planetary gear set may also be referred to as the third sun gear, third planetary carrier and third ring gear. The numbering may only serve as an assignment. For example, the third planetary gear may be free of ring gears besides the third sun gear.

The drive axle may comprise a differential lock. The differential lock may comprise a further switching element. The first and second output shaft may be non-rotatably connectable via the further switching element. When the differential lock is engaged, both output shafts may only rotate with the same rotational speed.

A permanent non-rotatable connection is a connection in which the two elements are rigidly coupled together. The elements may be formed as separate elements connected to each other in a permanent non-rotatable manner or may be integrally formed as one-piece. A non-rotatable connection between two elements may also be established by a switching element. The non-rotatable connection may be established when the switching element is actuated. The non-rotatable connection may be released when the switching element is no longer actuated. If two elements are mechanically operatively connected, the elements are directly or indirectly coupled to each other so that a movement of one element causes a reaction of the other element. A mechanical operative connection can be provided, for example, by frictional engagement or interlocking fit. The mechanical operative connection can correspond to a meshing between corresponding gears of the two elements. Further elements, such as shafts, constant velocity joints and/or one or more gear sets, may be present between the two mechanical operatively connected elements.

In an embodiment, the first output shaft is arranged coaxially to the drive shaft. Alternatively or additionally, the second output shaft is arranged coaxially to the drive shaft. Alternatively or additionally, the first output shaft is arranged coaxially to the second output shaft. The input shaft may be coaxially arranged to the drive shaft and alternatively or additionally to any of the output shafts.

In an embodiment, the first planetary gear set is arranged coaxially to the second planetary gear set. Alternatively or additionally, the first planetary gear set is arranged coaxially to the third planetary gear set. Alternatively or additionally, the second planetary gear set is arranged coaxially to the third planetary gear set. The two-speed transmission and the gearing may be arranged coaxially to each other. The two speed transmission and the drive shaft may be arranged coaxially to each other. The gearing and the drive shaft may be arranged coaxially to each other. All elements of the three planetary gear sets may be arranged coaxially to each other.

In an embodiment, the first planetary gear set and the second planetary gear set are radially stacked. For example, the second planetary gear set may be arranged radially outside of the first planetary gear set. For example, the first and second planetary gear sets may be arranged in the same axial plane or axially overlap. For example, the third element of the first planetary gear set and first element of the second planetary gear set may be integrally formed by one element, such as a sun-ring gear. The sun-ring gear may have radially inward facing teeth acting as the ring gear of the first planetary gear set and radially outward facing teeth acting as the sun gear of the second planetary gear set.

In an embodiment, the first switching element and the second switching element are formed by a dual switching element. A dual switching element may be actuated with a common single actuator. This may facilitate integration of the two switching elements and reduce a number of required parts. For example, the dual switching element may only have two states. In the first state of the dual switching element, the first switching element is in the second state and the first switching element is in the first state. In the second state of the dual switching element, the first switching element is in the first state and the first switching element is in the second state. The dual switching element may also optionally have a third state that provides an idle speed. In the third state, both switching elements may be in the first or open state and the drive shaft may be disconnected from the gearing and thus the output shafts.

In an embodiment, the first element of the first planetary gear set is a sun gear. The second element of the first planetary gear set may be a planetary carrier. The third element of the first planetary gear set may be a ring gear. The first element of the second planetary gear set may be sun gear. The second element of the second planetary gear set may be a planetary carrier. The third element of the second planetary gear set may be a ring gear. The gearing may thus be compact and have a high ratio. The sun gear, planetary carrier and ring gear of the first planetary gear set may also be referred to as the first sun gear, first planetary carrier and first ring gear. The sun gear, planetary carrier and ring gear of the second planetary gear set may also be referred to as the second sun gear, second planetary carrier and second ring gear. The numbering of the sun gear, ring gear and planetary carrier of each planetary gear set may only serve as an assignment. For example, the second planetary gear may be free of sun gears besides the second sun gear. Each first element of the planetary gear sets may be a sun gear. Each second element of the planetary gear sets may be a planetary carrier. Each third element of the planetary gear sets may be a ring gear. All three planetary gear sets may be configured as minus planetary gear sets.

In an embodiment, the drive axle comprises an electrical motor having a rotor shaft. The rotor shaft may form the drive shaft of the drive axle. The electrical motor may be configured as described above. In an embodiment, the first and the second switching elements are arranged axially between the electric motor and the gearing. For example, the third planetary gear set may be arranged on an axial side of the two-speed transmission facing toward the electrical motor. For example, the first and second switching element may be arranged on an axial side of the two-speed transmission facing toward the gearing. The first and second switching elements may be arranged axially between the third planetary gear set and the gearing. The axial direction may be defined by the rotor shaft, input shaft, first output shaft and alternatively or additionally the second output shaft. The first and the second switching elements may axially overlap or be provided in the same axial plane, wherein the first switching elements may be provided radially outside the second switching element.

In a second aspect, the present disclosure relates to a vehicle. The vehicle comprises a drive axle according to the first aspect. The respective advantages and further features can be taken from the description of the first aspect, wherein embodiments of the first aspect also form embodiments of the second aspect and vice versa.

### Brief description of drawings

Fig. 1 shows a vehicle with an electrical drive axle in a schematic top view.
Fig. 2 schematically shows a general layout of the electrical drive axle of the vehicle of Fig. 1.
Fig. 3 schematically shows the electrical drive axle shown in Fig. 2 according to an embodiment.

### Detailed description of embodiments

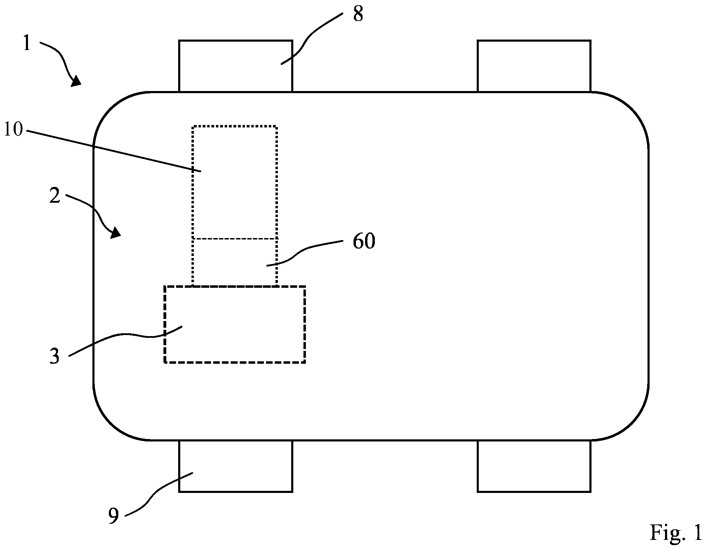

Fig. 1 shows a vehicle 1 with an electrical drive axle 2 according to an embodiment of the present disclosure. The electrical drive axle 2 comprises a gearing 3, an electrical motor 10 and a two-speed transmission 60. The transmission is configured for transferring power input from the electrical motor 10 with two selectable speeds to the gearing 3. The gearing 3 is configured for transferring power output from the two-speed transmission 60 to at least two drive elements 8, 9.

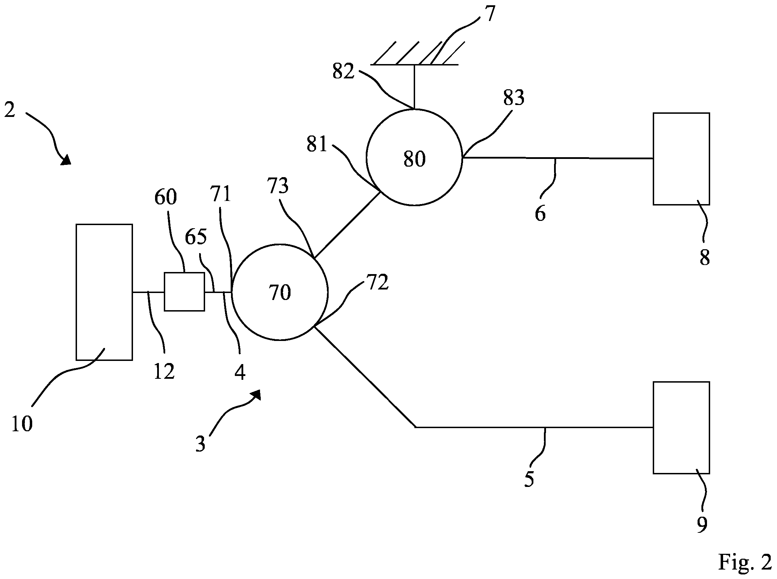

Fig. 2 schematically shows a general layout of the electrical drive axle 2 according to an embodiment of the present disclosure. In the present embodiment, the gearing 3 of the electrical drive axle 2 is a distribution gearing with a first planetary gear set 70 and a second planetary gear set 80. As can be seen from Figure 2, the first planetary gear set 70 comprises a first element 71, a second element 72 and a third element 73. The second planetary gear set 80 comprises a first element 81, a second element 82 and a third element 83. Power of the electrical motor 10 can be introduced into the gearing 3 via the two-speed transmission 60 into the first element 71 of the first planetary gear set 70. A rotor shaft 12 of the electrical motor 10 forming a drive shaft is mechanically operatively connectable to an input shaft 4 of the gearing 3 via the two-speed transmission 60.

The two-speed transmission 60 is mechanically operatively connected to the first element 71 of the first planetary gear set 70, here by an output shaft 65 of the two-speed transmission 60 being permanently non-rotatably connected to the first element 71 of the first planetary gear set 70. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 7. A first output shaft 5 of the gearing 3 is mechanically operatively connected to the second element 72 of the first planetary gear set 70, in this case permanently non-rotatably connected, for outputting power to a first drive element 8. A second output shaft 6 of the gearing 3 is mechanically operatively connected to the third element 83 of the second planetary gear set 80, in this case permanently non-rotatably connected, for outputting power to a second drive element 9.

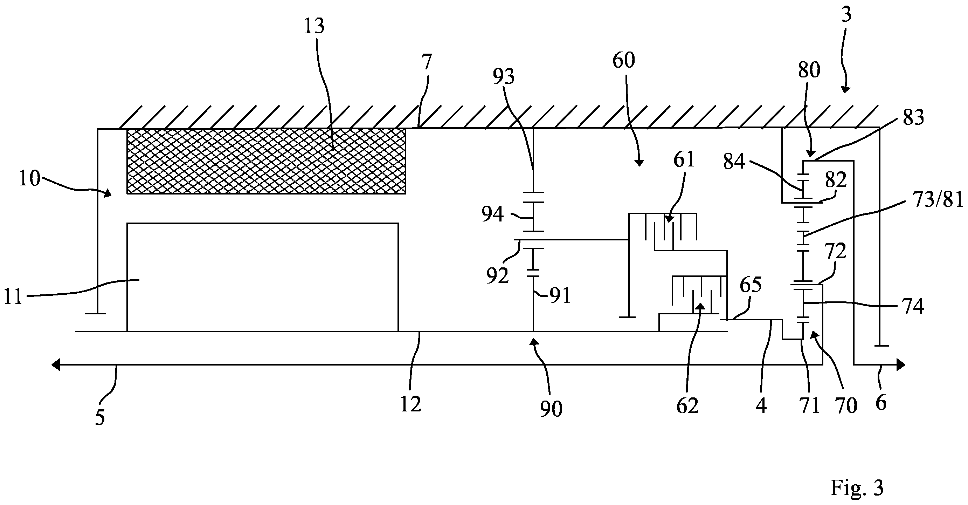

Fig. 3 schematically shows the electrical drive axle 2 shown in Fig. 2 according to an embodiment. In this figure, details of the two-speed transmission 60 are shown as well. The transmission 60 comprises a third planetary gear set 90 with a first element 91, second element 92 and third element 93. Further, the two-speed transmission 60 comprises a first switching element 61 and a second switching element 62. Here, the two switching elements 61, 62 are configured as a multi-plate clutch and form a dual switching element that only requires one single actuator for their actuation. In the shown embodiment, the dual switching element may only be adjusted between a first state, in which the first switching element 61 is closed and the second switching element 62 is open, and a second state, in which the first switching element 61 is open and the second switching element 62 is closed. A first transmission speed is selected in the first state of the dual switching element and a second transmission speed in the second state of the dual switching element. The amount of the transmission ratio in the first state is larger, e.g. more than double, the amount of the transmission ratio in the second state. In a further embodiment, the dual switching element may be adjusted into a third state in which both the first and second switching elements 61, 62 are closed.

The first element 71 of the first planetary gear set 70 is formed as a first sun gear. The second element 72 of the first planetary gear set 70 is formed as a first planetary carrier. The third element 73 of the first planetary gear set 70 is formed as a first ring gear. The first element 81 of the second planetary gear set 80 is formed as a second sun gear. The second element 82 of the second planetary gear set 80 is formed as a second planetary carrier. The third element 83 of the second planetary gear set 80 is formed as a second ring gear. The first element 91 of the third planetary gear set 90 is formed as a third sun gear. The second element 92 of the third planetary gear set 90 is formed as a third planetary carrier. The third element 93 of the third planetary gear set 90 is formed as a third ring gear. Each planetary carrier 72, 82, 92 comprises a plurality of planetary pins. On each planetary pin a corresponding planetary gear 74, 84, 94 is rotatably mounted. Each of the three planetary gear sets 70, 80, 90 is configured as a minus planetary gear set with the planetary gears 74, 84, 94 each meshing with the corresponding sun gear and the corresponding ring gear. In the present embodiment, the ring gear 73 of the first planetary gear set 70 is formed integrally with the sun gear 81 of the second planetary gear set 80. The stationary member 7 forms a housing of the drive axle 2. The housing 7 houses the electrical motor 10, the transmission 60 and the gearing 3.

The electrical motor 10 comprises a rotor 11 and a stator 13. The rotor 11 is permanently non-rotatably connected to the rotor shaft 12. The rotor 11 is configured to generate torque from a magnetic field provided by the stator 13 and to apply the generated torque to the rotor shaft 12. The stator 13 is permanently non-rotatably supported in the stationary member 7. The electrical motor 10 is hollow with the first output shaft 5 extending axially through the rotor shaft 12 and the rotor 11 to a side of the electrical motor 10 axially opposite the gearing 3.

As can be taken from the embodiment shown in Fig. 3, the third sun gear 91 is permanently non-rotatably connected to the rotor shaft 12. The third planetary carrier 92 is non-rotatably connectable to the input shaft 4 of the gearing 3 via the first switching element 61. The third ring gear 93 is permanently non-rotatably connected to the stationary member 7. Further, the rotor shaft 12 is non-rotatably connectable to the input shaft 4 of the gearing 3 via the second switching element 62.

The electrical motor 10, the third planetary gear set 90, the second planetary gear set 80, the first planetary gear set 70, the input shaft 4, the first output shaft 5 and the second output shaft 6 are all arranged coaxially to each other. The two-speed transmission 60 is arranged axially between the electrical motor 10 and the gearing 3. The dual switching element is arranged axially between the third planetary gear set 90 and the gearing 3. The first switching element 61 and the second switching element 62 axially overlap, wherein the first switching element 61 is provided radially outside of the second switching element 62. The second planetary gear set 80 is arranged in the same axial plane as the first planetary gear set 70. The first and second planetary gear set 70, 80 are radially stacked with the second planetary gear set 80 being arranged axially outward of the first planetary gear set 70.

### Reference signs

- 1: vehicle
- 2: drive axle
- 3: gearing
- 4: input shaft
- 5: first output shaft
- 6: second output shaft
- 7: stationary member
- 8: first drive element
- 9: second drive element
- 10: electrical motor
- 11: rotor
- 12: drive shaft / rotor shaft
- 13: stator
- 60: two-speed transmission
- 61: first switching element
- 62: second switching element
- 65: output shaft of two-speed transmission
- 70: first planetary gear set
- 71: first element of first planetary gear set / sun gear
- 72: second element of first planetary gear set / planetary carrier
- 73: third element of first planetary gear set / ring gear
- 74, 84, 94: planetary gear
- 80: second planetary gear set
- 81: first element of second planetary gear set / sun gear
- 82: second element of second planetary gear set / planetary carrier
- 83: third element of second planetary gear set / ring gear
- 90: third planetary gear set
- 91: first element of third planetary gear set / sun gear
- 92: second element of third planetary gear set / planetary carrier
- 93: third element of third planetary gear set / ring gear

## Claims

1. A drive axle (2) for a vehicle (1), wherein the drive axle (2) comprises a drive shaft (12), a two-speed transmission (60), a stationary member (7) and a gearing (3) with an input shaft (4), a first output shaft (5), a second output shaft (6), a first planetary gear set (70) and a second planetary gear set (80), wherein the two-speed transmission (60) comprises a first switching element (61), a second switching element (62) and a third planetary gear set (90), wherein the first planetary gear set (70) comprises a first element (71), a second element (72) and a third element (73), wherein the second planetary gear set (80) comprises a first element (81), a second element (82) and a third element (83), wherein the third planetary gear set (90) comprises a first element (91), a second element (92) and a third element (93), wherein the input shaft (4) is permanently non-rotatably connected to the first element (71) of the first planetary gear set (70), wherein the second element (72) of the first planetary gear set (70) is permanently non-rotatably connected to the first output shaft (5), wherein the third element (73) of the first planetary gear set (70) is permanently non-rotatably connected to the first element (81) of the second planetary gear set (80), wherein the second element (82) of the second planetary gear set (80) is permanently non-rotatably connected to the stationary member (7), wherein the third element (83) of the second planetary gear set (80) is permanently non-rotatably connected to the second output shaft (6), wherein the first element (91) of the third planetary gear set (90) is permanently non-rotatably connected to the drive shaft (12), wherein the second element (92) of the third planetary gear set (90) is non-rotatably connectable to the input shaft (4) via the first switching element (61), wherein the third element of the third planetary gear set (90) is permanently non-rotatably connected to the stationary member (7), wherein the drive shaft (12) is non-rotatably connectable to the input shaft (4) via the second switching element, wherein the first element (91) of the third planetary gear set is a sun gear, wherein the second element (92) of the third planetary gear set is a planetary carrier, and wherein the third element (93) of the third planetary gear set is a ring gear.

2. The drive axle (2) according to claim 1, **characterized in that** the first output shaft (5), the second output shaft (6) and the drive shaft (12) are arranged coaxially to each other.

3. The drive axle (2) according to claim 1 or 2, **characterized in that** the first planetary gear set (70), the second planetary gear set (80) and the third planetary gear set (90) are arranged coaxially to each other.

4. The drive axle (2) according to any one of the preceding claims, **characterized in that** the first planetary gear set (70) and the second planetary gear set (80) are radially stacked.

5. The drive axle (2) according to any one of the preceding claims, **characterized in that** the first switching element (61) and the second switching element (62) are formed by a dual switching element.

6. The drive axle (2) to any one of the preceding claims, **characterized in that** the first element (71) of the first planetary gear set (70) is a sun gear, the second element (72) of the first planetary gear set (70) is a planetary carrier, the third element of the first planetary gear set (70) is a ring gear, the first element (81) of the second planetary gear set (80) is a sun gear, the second element (82) of the second planetary gear set (80) is a planetary carrier, and the third element of the second planetary gear set (80) is a ring gear.

7. The drive axle (2) according to any one of the preceding claims, further comprising an electrical motor (10) having a rotor shaft, the rotor shaft forming the drive shaft (12).

8. The drive axle (2) according to claim 7, **characterized in that** the two-speed transmission (60) is arranged axially between the electric motor and the gearing (3).

9. A vehicle (1) comprising a drive axle (2) according to any one of the preceding claims.
